# EUROPEAN PATENT APPLICATION

(11) **EP 3 121 780 A1**
(43) Date of publication of application: **25.01.2017**
(21) Application number: 15180532.2
(22) Date of filing: 11.08.2015
(51) Int. Cl.: G06Q 30/02

(54) **DISSEMINATING CONTENT TO RECIPIENTS USING MULTIPLE DISTRIBUTION CHANNELS**

(30) Priority: 24.07.2015 EP 15178321
(71) Applicant: Fensel, Dieter, 6410 Telfs (AT)
(72) Inventor: Fensel, Dieter, 6410 Telfs (AT)
(74) Representative: Dennemeyer & Associates S.A.

(57) **Abstract**

A method and a computer-based system for disseminating content to recipients using multiple distribution channels are provided. A content ontology comprising the content is generated. A recipients ontology, associated with the recipients, and multiple channel ontologies are provided. Each channel ontology is associated with one of the distribution channels. Multiple adapter are provided and each adapter is associated with one channel ontology and arranged for disseminating content over the associated distribution channel. Information from said content ontology and said recipients ontology is mapped into said channel ontologies using mapping rules. Then the content is disseminated using the channel ontologies and the adapters associated with them. The content ontology, the recipients ontology and/or the channel ontology may be structured in accordance with the schemas of Schema.org.

## Description

### FIELD OF THE INVENTION

The present invention relates to a method, a computer program, a computer-readable storage medium and a computer-based system for the dissemination of information to different information channels.

### BACKGROUND OF THE INVENTION

Communication is essential for any human interaction. Over the last few years the way people interact with each other has changed, due to the advent and widespread use of social media platforms and online communication channels. The reachable audience has changed from a closed circle of friends to, potentially, the whole world. Therefore, especially in the business world, the considerations what, when, how and where to share information has become of utmost importance. Every company, regardless of its size, needs an efficient and effective online communication strategy to actually benefit (and eventually profit) from its online communication.

### DESCRIPTION OF RELATED ART

Many software packages available on the market can support companies with their online communication. These software packages may automate sending information over a communication channel according to a schedule, wherein the information, the recipients, a time schedule for transmitting the information, and/or the choice of appropriate communication channel(s) is provided by the user. However, the number of possible recipients, the number of communication channels available for each recipient and the different requirements for transmitting information on each of the communication channels have increased. Each channel may require its own way of operating and using it. Thus, determining what to send to whom at which time and using which channel has become a problem.

### OBJECT OF THE INVENTION

It is, therefore, an object of the present invention to provide a method for the dissemination of information to different information channels that takes into account the increase of communication options.

### BRIEF SUMMARY OF THE INVENTION

According to a first aspect of the invention, this objective is achieved by providing a method for disseminating content to recipients using multiple distribution channels, comprising the computer-based steps of:
- generating a content ontology comprising said content;
- providing a recipients ontology, associated with said recipients;
- providing multiple channel ontologies, wherein each channel ontology is associated with one of said multiple distribution channels;
- mapping information from said content ontology and said recipients ontology into said channel ontologies using mapping rules; and
- providing multiple adapters, wherein each adapter is associated with one channel ontology and arranged for disseminating content over said channel;
- disseminating content using said channel ontologies and adapters associated with them.

The content may be information in any form such as text, images and multimedia information. Recipients may comprise natural persons or devices such as computer systems. The multiple distribution channels may comprise a webpage, email, twitter, Facebook, google+ and other social media. The content may be provided by a user or by a computer system.

When a content ontology is generated, the content is stored as instances in the data model of the content ontology. The recipients ontology may contain the names of the recipients, fields of interests, their preferred communication channel and additional profile information. The channel ontologies may comprise connection information that is required to access the different channels, such as a login name and a password.

An adapter is a device, module or program (part) that may be arranged for transmitting the content to the recipients using the information stored in the channel ontology.

If F-logic is used as language for the ontologies, the adapters can be modules or predicates. If production rules are used, predicates or update actions are used for the adapters.

In general, rules and ontologies may be formulated using a Horn Logic language or more specific F logic.

The mapping rules may also be production rules or business rules. Using these rules and information in the content ontology (for example: the subject of the content) and information in the recipients ontology (for example: interests and distribution channel), information from the content ontology (for example: a summary of the content) and from the recipients ontology (for example: email address of the recipient) may be inserted into the appropriate channel ontology. This is achieved by inferencing / reasoning using the mapping rules. The information may be processed, for example by using rules, before or after it is inserted in the channel ontology.

The adapter associated with the appropriate channel ontology may then disseminate the content using the channel ontology, for example transmitting the summary of the content per email to the recipient.

Using the ontologies and the rules as described above, a large number of communication options can be taken into consideration. The number of the ontologies and classes of the ontologies may easily be extended. Adding pieces of information as instances in the ontologies may be executed by a computer. The evaluation of rules may also be executed by a computer.

Using ontologies for the dissemination of content has the additional advantage that these ontologies may contain logical rules defining e.g. relations between different instances or related to properties of instances. These can be evaluated - for the content and for the recipients. Any new information deduced by reasoning on the ontologies and these rules can be added to the ontologies and subsequently used for the dissemination.

In an embodiment according the invention, the mapping rules define criteria for selecting recipients and/or channels for the dissemination of at least a part of the content from the content ontology.

In another embodiment according the invention, the step of mapping information comprises reasoning on said mapping rules, the content ontology, the recipients ontology and/or the channel ontologies.

The mapping rules comprise the knowledge about what (part of the) content is to be sent to whom, using which channel, at what time in specific circumstances.

In general, an advantage of using rules is that they can be easily understood and maintained by ordinary users, for example users with little or no programming skills.

According to an embodiment of the invention, said recipients ontology comprises attributes or properties of the recipients, the attributes or properties indicating at least one of:
- an age of the recipient;
- a geographical location of the recipient;
- a preferred time period for receiving content;
- a preferred channel for receiving content.

The attributes or properties may be assigned to the class of the recipients. Based on these attributes target groups of recipients may be formed, e.g. by processing the mapping rules. For example, a target group may be defined as all recipients that live within 100 meters from a certain shop and are of an age between 20 and 30 years. To these recipients a coupon for that shop may be transmitted via twitter or email.

In another embodiment, said content ontology comprises attributes or properties of the content, the attributes or properties indicating at least one of:
- a time period, in which said content is to be distributed to said recipients;
- a geographical area, in which recipients are to be present when said content is distributed;
- a subject of said content.

The attributes or properties may be assigned to the class of the content. Based on these attributes target groups of recipients may be formed, e.g. by processing the mapping rules. For example, a target group may be defined as all recipients, who have an interest in a certain topic.

To further enhance the possibilities for the dissemination of content a content extractor capable of extracting content from a content provider is provided. The extracted content can be placed as instance into the content ontology.

If F-logic is used as language for the ontologies, the content extractor can be a module or a predicate. If production rules are used, predicates or update actions are used for the content extractor. The same can be done for the recipients ontology.

A preferable source of information or content provider is the world wide web.

The extraction of content works particularly well if the content extractor is configured to read external content that is annotated with the help of schema.org and/or that is organized in tables and/or that is contained in a database.

That way, content that is annotated in e.g. schema.org can automatically be read, added to the content ontology and automatically be reposted in an intelligent manner with this dissemination method.

The content may also be provided in XML-, CSV-files, in external ontologies or in LODs.

In an embodiment of the invention, at least one channel ontology comprises at least one of:
- access information for the associated distribution channel;
- criteria for selecting content suitable for being distributed via the associated channel.

When evaluating the mapping rules, information from the channel ontologies may be taken into account. For example, content in a long article (information found in the content ontology) may not be suitable for twitter (information found in the channel ontology). Furthermore, the adapters may use the information in the channel ontologies, such as access information as a login and password combination, for the transmission of the content.

The vocabulary of schema.org may be used for the content ontologies, the recipients ontologies and/or the channel ontologies. Or it may be stated that the content ontology, the recipients ontology and/or the channel ontology are structured in accordance with the schemas of Schema.org.

According to a second aspect of the invention, a computer program is provided, wherein the computer program is adapted to perform the method according to any of the preceding claims while the computer program is being executed on a computer.

According to a third aspect of the invention, a computer-readable storage medium is provided, storing a set of controller executable code, which, when executed in a mobile device, on a processing system or in a digital signal processor, performs the method steps according to any of the preceding method claims.

According to a fourth aspect of the invention, a computer-based system is provided for disseminating content to recipients using multiple distribution channels, comprising:
- a content ontology generating module, arranged for generating a content ontology comprising said content;
- a recipients ontology generating module arranged for generating a recipients ontology comprising data about said recipients;
- multiple channel ontology generating modules arranged for generating multiple channel ontologies comprising data about said multiple distribution channels; wherein each channel ontology is associated with one of said multiple distribution channels;
- a mapping module, arranged for mapping information from said content ontology and said recipients ontology into said channel ontologies using mapping rules;
- multiple adapter modules, wherein each adapter module is associated with one channel ontology and arranged for disseminating content over said channel.

The computer-based system also comprises an inference engine to reason on the ontologies and their rules.

The features of embodiments of the method as described in this document may be applied to the embodiment of the computer-based system, mutatis mutandis. Also the effects and the advantages of the method as described in this document may also be applicable for embodiments of the computer-based system, mutatis mutandis.

### BRIEF DESCRIPTION OF THE DRAWINGS

For a more complete understanding of the present invention, reference is established to the following description made in connection with accompanying drawings in which:
Figure 1 shows a schematic overview of an information dissemination platform;
Figure 2 shows a schematic overview of an embodiment of the method according to the invention; and,
Figure 3 shows a schematic overview of an embodiment of the computer-based system according to the invention.

### DETAILED DESCRIPTION OF THE INVENTION

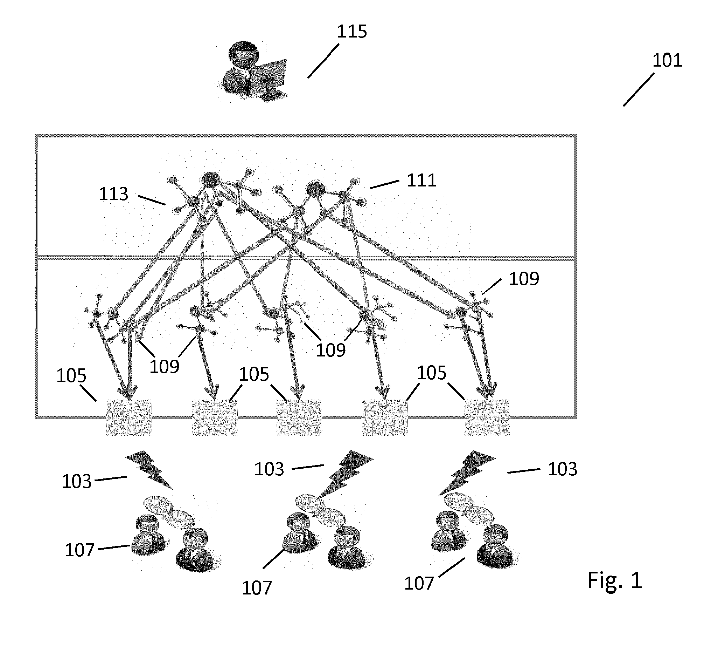

Figure 1 shows a schematic overview view of an information dissemination platform 101, which it used to describe features according to the invention.

A number of distribution channels 103 may be accessed by adapters 105 in order to disseminate content to recipients 107. Examples of distribution channels are messengers, such as WhatsApp, short message services, such as SMS or Twitter, content management systems, such as Drupal, and social networks such as Facebook and Linkedln, as well as a homepage on the Internet.

The adapters 105 may obtain information from channel ontologies 109. Each channel ontology 109 is associated with a distribution channel 103 and may comprise the information requirements for the associated distribution channels and information how to access the associated distribution channel.

An example for an adapter is an e-mail adapter that gets information regarding the recipient's email address (or several addresses of several recipients of this mail), the subject and the text. It can access an SMTP-server and send emails. Similar adapters exist for messaging services like Twitter, social networks like Facebook, for content management systems to fill web pages etc.

The content ontologies 111 and the recipients ontology 113 may comprise all the information that is needed to feed the different distribution channels. The content ontology 111 may comprise the content itself, the time scope, the context like the location etc. The recipients ontology 113 may comprise information about the recipients like their preferences, their interests, their geographical location, etc. The content ontology 111 and/or the recipients ontology 113 may obtain the information from an information producer 115. The information producer may be a person or an automatic content extractor.

The content ontologies 111 and the recipients ontology 113 are mapped to the channel ontologies 109 by a mapping module using mapping rules. This happens when the inference engine of the system performs reasoning on the ontology and its rules.

Thus, it may be stated that the relationship between the data structure in the content ontology 111 and in the channel ontology 109 is described by rules. Rules may access with their rule bodies structures of the content ontologies 111. The head of a rule may assign information to the appropriate structure in the channel ontology 109. Rules may also transform the information or compute new or additional information which is then fed into the channel ontology 109. These mappings may perform decisions for feeding information into the channels.

A simple example is that a message with a short term information is sent to people who live close to the sender only. Using public information like news, weather information, linked open data or similar these decisions could become very complex. For instance people who are currently waiting for a train in a train station could be invited to a restaurant close to the train station if it is known that the train is late for more than 30 minutes.

The adapters 105 may get the content information and the access information from the reasoning system, i.e. the inference engine performing reasoning. With this information, the adapter 105 may access the channel and feeds the right information into this channel.

An example for a simple adapter is an email adapter. It gets information about the recipient(s), the subject and for the text from the reasoning system. It accesses the SMTP-server and sends the email. Similar adapters may be provided for messaging services like Twitter, social networks like Facebook, for content management systems to fill web pages etc.

For the reasoning system the mentioned adapters 105 may look like predicates. The arguments of the predicates may contain the input information from the reasoning system. For the reasoning system, these predicates can be built-in predicates which occur in the head of a mapping rule.

The following is an example of an embodiment of the system and/or method according to the invention. In this example, a shop is selling a new product for young people and wants to advertise it online. In order to do so, the shop creates, by itself and/or with the help of a media and marketing agency, content to advertise the product including a comprehensive textual description of the product and its features, a set of images as well as a video material showcasing the product. The shop wants the content describing the new product to be seen by a target audience comprising of people of an age between 20 and 30 years, living within 100 meters from the shop and being regularly online on twitter, YouTube and email.

In order to support the shop with its online dissemination activities, a computer-based system 101 for disseminating content to recipients using multiple distribution channels is provided, which may comprise:
- A content ontology 111, which may include classes and properties modelling the product, its features, and any domain related information that can be used to describe the content to be disseminated.
- A recipient ontology 113 which may include classes and properties modelling the recipients of the content. Several aspects can be modelled using the recipient ontology 113 including the age of the recipient, the geographical location of the recipient and their preferences.
- Channels ontologies 109 for twitter, YouTube and e-mail. For e-mail channel in particular, the channel ontology 109 may include classes and properties modelling: (1) settings information e.g. server name, port, authentication method, (2) access information, e.g. user name, password, (3) security information e.g. encryption, digital signature, as well as technical restrictions for the channel e.g. attachments larger than 25MB are nor supported, (4) Information how dissemination of content can be targeted according to age, gender, income, location, preferences, etc. of channel users.
- Mappings 207 between the content and recipients ontologies into channel ontologies using rules. In an informal way, such a mapping may be expressed as follows: (Rule1) IF there is new content about a product for young people THEN publish the advertisement content to twitter, YouTube and send emails to young audience with an age between 20 and 30 years living within 100 meters from the shop, and Facebook users with appropriate profile.
- Adapters 105 for twitter, YouTube and email. For e-mail in particular, the adapter may be a program which can access an SMTP-server and sends and receives emails.

With these in place, the entire process, from content definition to actual publishing on channels, can be as follows. The content, describing the product, may be annotated according to the content ontology. The parts of the text contain the product description may be annotated with the product concept from the content ontology; the textual price information may be annotated with the price concept from the content ontology, etc. The same may happen with the images and video.

As the intended audience are young people of an age between 20 and 30 years, living in the vicinity of the shop, instance data corresponding to these recipients have to be created. Furthermore, instances of the channels ontologies for twitter, YouTube and email need to be available. For example, for the shop marketing department, the corresponding instance of the e-mail concept from the e-mail channel ontology will contain concrete settings, access and security for its e-mail. The mappings can be then executed if the conditions are fulfilled.

If we take the mapping introduced before (Rule1), given that there is new content about a product for young people (there exist a new instance of a product concept from the content ontology, which annotates the actual content), a new instance of an action (i.e. publish to twitter, YouTube, Facebook and send email) may be created. Such action instance may point to recipients instances where the content should be sent to, to the channels instances (e.g. the shop marketing e-mail instance) and to the content instances. The e-mail adapter may notice this new action instance and may take the shop marketing e-mail instance, the recipients list of instances and the content instances and may send emails with the content from the shop marketing e-mail address to the recipients. The twitter, Facebook and YouTube adapters may act similarly taking into account the possibility to target news according to user profiles.

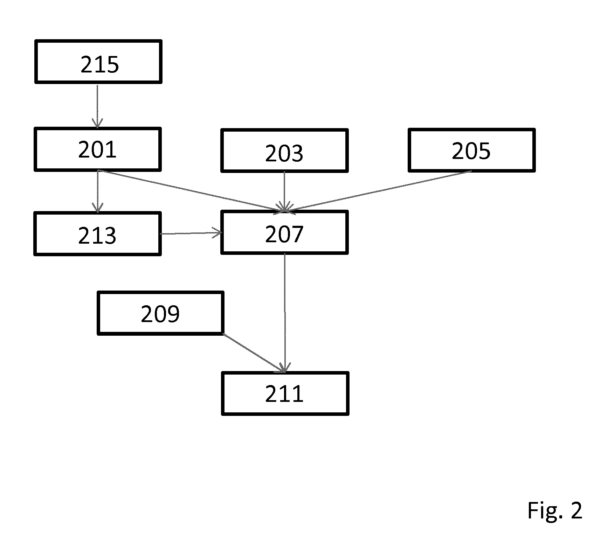

Figure 2 shows a schematic overview of an embodiment of the method for disseminating content to recipients using multiple distribution channels. A content ontology is generated in step 201, a recipients ontology is provided in step 203 and a channel ontology is provided in step 205. The content ontology comprises the content, while the recipients ontology is associated with said recipients. The channel ontologies are each associated with one of the distribution channels.

The information from the content ontology and the recipients ontology is mapped into one or more channel ontologies in step 207 using mapping rules. The mapping rules may define criteria for selecting recipients and/or channels for the dissemination of at least a part of content from the content ontology. The mapping may comprise reasoning or evaluating said mapping rules on the content ontology, the recipient ontology and/or the channel ontologies. Selected information will then be inserted into the channel ontologies.

The recipients ontology may comprise information relating to the age of the recipient, the geographical location of the recipient, the preferred time period for receiving content and/or and preferred channel for receiving content. The content ontology may comprise information indicating the time period, in which the content is to be distributed to the recipients, the geographical area, in which recipients are to be present when said content is distributed and/or the subject of said content.

Using the mapping rules it may be derived that certain content is appropriate for certain recipients with respect to their age (for example between 20 and 25) and with respect to their location (for example in Vienna). It may also be derived that the preferred distribution channel for this recipient is email.

The channel ontology may comprise indicating content requirements for the associated distribution channel, access information for the associated distribution channel and/or criteria for selecting content suitable for being distributed via the associated channel.

Using the mapping it may be further derived that for the email distribution channel a text is needed and at least one email address is needed. Therefore, during the mapping, (at least a part of) the content in the content ontology may be mapped as a text into the channel ontology together with the email address of the recipient originating from the recipients ontology.

In step 209 multiple adapters are provided. Each adapter is associated with one channel ontology and arranged for disseminating content over the associated channel. And in step 211, the content is disseminated using or on the basis of the (information in the) channel ontologies and the adapters associated with them.

For example, the adapter may obtain the email address from the recipient and the relevant content in text form. Based on that, the adapter may send an email to the recipient with the text.

The mapping of information in the content ontology may be enhanced by evaluating rules defining relations or constraints on the content (step 213). Using these rules, additional information may be obtained.

Information may be inserted into the content ontology manually by a user. It may also be extracted from a content provider using a content extractor in step 215 and then added to the content ontology. The content provider may be a database or a webpage.

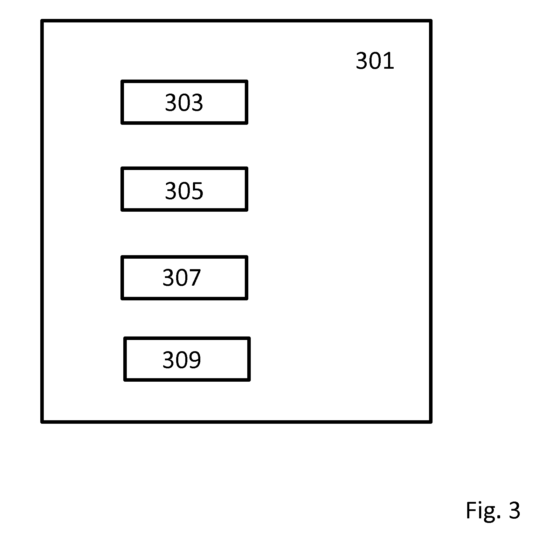

Figure 3 shows a schematic overview of a computer-based system according to an embodiment of the invention. The system 301 comprises a content ontology generating module 303. This module is arranged for generating a content ontology comprising said content. The system 301 also comprises a mapping module 305 that is arranged for mapping information from the content ontology and the recipients ontology into the channel ontologies using mapping rules. Also an adapter module 307 is comprised in the system comprising multiple adapters, each adapter is associated with one channel ontology and arranged for disseminating content over associated channel using the channel ontology.

The information may be extracted from a content provider 309 before it is inserted into the content ontology. The content provider 309 may be a database.

While the present inventions have been described and illustrated in conjunction with a number of specific embodiments, those skilled in the art will appreciate that variations and modifications may be made without departing from the principles of the inventions as herein illustrated, as described and claimed. The present inventions may be embodied in other specific forms without departing from their spirit or essential characteristics. The described embodiments are considered in all respects to be illustrative and not restrictive. The scope of the inventions is, therefore, indicated by the appended claims, rather than by the foregoing description.

### GLOSSARY

### ONTOLOGIES

In computer science, the term ontology designates a data model that represents a domain of knowledge and is used to reason about the objects in that domain and the relations between them.

An ontology preferably comprises a hierarchical structure of classes. Within the hierarchical structure, the classes of a particular layer of the hierarchical structure are allocated to precisely one class of the higher-level layer. In general, there is only a simple inheritance of characteristics in such a case. In general, the class structure can also be arranged in different ways, for example as acyclic graph in which multiple inheritances can also be permitted.

To the classes, attributes are allocated which can be transmitted within a class structure. Attributes are features of a class. The class "person" can have the attribute "hair colour", for example. To this attribute, different values (called "attribute values") are allocated for different actual persons (called "instances"), e.g. brown, blond, black, etc. Sometimes in the literature, the classes are called "categories" and the attributes are called "properties".

Contemporary ontologies share many structural similarities, regardless of the language in which they are expressed (see en.wikipedia.org/wiki/Ontology_%28information_science %29 (last opened on July 6, 2015)). As mentioned above, most ontologies describe individuals (instances), classes (concepts), attributes, and relations.

Common components of ontologies include:
- Individuals: instances or objects (the basic or "ground level" objects).
- Classes: sets, categories, collections, concepts, classes in programming, types of objects, or kinds of things.
- Attributes: aspects, properties, features, characteristics, or parameters that objects (and classes) can have.
- Relations: ways in which classes and individuals can be related to one another.
- Function terms: complex structures formed from certain relations that can be used in place of an individual term in a statement.
- Restrictions: formally stated descriptions of what must be true in order for some assertion to be accepted as input.
- Rules: statements in the form of an if-then (antecedent-consequent) sentence that describe the logical inferences that can be drawn from an assertion in a particular form.
- Axioms: assertions (including rules) in a logical form that together comprise the overall theory that the ontology describes in its domain of application. This definition differs from that of "axioms" in generative grammar and formal logic. In those disciplines, axioms include only statements asserted as a priori knowledge. As used here, "axioms" also include the theory derived from axiomatic statements.
- Events: the changing of attributes or relations.

Ontologies are commonly encoded using ontology languages, of which there are at least two dozens (see e.g. en.wikipedia.org/wiki/Ontology_language).

### RULES

A rule is an intuitive form of representing knowledge, easy to understand by human and well-suited to be processed by machine. A rule specifies a certain conclusion whenever a certain premise is satisfied. Rules can be categorized as deduction (derivation) rules, normative (integrity) rules, and reactive (active) rules [Boley, H., Kifer, M., Ptrnjan, P.L., Polleres, A.: Rule interchange on the web. In: Reasoning Web. Volume 4636 of LNCS., Springer (2007) 269-309]. Reactive rules are widely used to detect and react to a dynamic environment such as web.

Production rule (also known as Condition-Action rule) is a type of reactive rules, formalized in the form "IF Condition THEN Action". A rule in this form defines that the Action part will be executed whenever the Condition part is satisfied. In a production rule system [https://en.wikipedia.org/wiki/Production_system_(computer_science)], rules (termed productions) will be executed in order to achieve some goals. For example, in business, the rules (so called business rules [https://en.wikipedia.org/wiki/Business_rules_engine]) are intended to control the structure or behaviour of the business, such as to define the decision logic of an operation (action) whenever a situation (condition) occurred within an organization.

When reasoning on an ontology, also called inferencing, i.a. the rules of the ontology are evaluated. Evaluating rules may also be referred to as processing rules.

### HORN LOGIC

Horn Logic as a formal language, which has a corresponding inference procedure, thus forming a formal system together. The formal language allows to express rules (and facts), and queries. The inference procedure computes answers to queries from rules (and facts) [http://www.w3.org/2005/rules/wg/wiki/Horn_Logic].

### F-LOGIC

For the formulation of queries, often the logic language F-Logic is a useful ontology language (see, e.g., J. Angele, G. Lausen: "Ontologies in F-Logic" in S. Staab, R. Studer (Eds.): Handbook on Ontologies in Information Systems. International Handbooks on Information Systems, Springer, 2003, page 29). The following example describes properties of persons and family relationships:

```
   /* ontology */
   woman::person.           // class hierarchy
   man::person.
   person[father=>man,mother=>man,son=>man,daughter=>woman].
   /* rules consisting of a rule head and a rule body */
   ?X[son: ?Y] :- ?Y:man, ?Y[father: ?X].
   ?X[son: ?Y] :- ?Y:man, ?Y[mother: ?X].
   ?X[daughter: ?Y] :- ?Y:woman, ?Y[father: ?X].
   ?X[daughter: ?Y] :- ?Y:woman, ?Y[mother: ?X].
   /* facts */
   Abraham:man.
   Sarah:woman.
   Isaac:man.
   Isaac[father-> Abraham, mother-> Sarah].
   Ishmael:man.
   Ishmael[father-> Abraham, mother-> Hagar].
   Jacob:man.
   Jacob[father-> Isaac, mother-> Rebekah].
   Esau:man.
   Esau[father-> Isaac, mother-> Rebekah].
   /* query */
   ?- ?X:woman, ?X[son: ?Y], ?Y[father: Abraham].
```

The first part of this example is a small ontology. It states that every woman and every man is a person. Persons also have attributes, like father, mother, daughter, son, and the attributes have ranges (the range of son is man, for example, and of mother is woman). The statements that specify the types of the attributes are called signatures.

Then follows a set of rules, which say what else can be derived from the ontology. The first rule says that if ?X is the father of ?Y and ?Y is a man, then ?Y is a son of ?X. A similar relationship holds for sons and mothers, and for daughters, fathers, and mothers.

Once the ontology is ready, it is populated it with facts, some of which are specified at the end of the example. These facts indicate that Abraham is a man and Sarah is a woman. And that Isaac is a man and his parents are Abraham and Sarah. Similar information is supplied on a number of other well-known individuals. These facts form the basis of an object base in the example. Other facts can be derived via deductive rules or other inference rules, such as inheritance. For instance, it can be derived that Isaac is a son of Abraham even though this is not stated explicitly via a fact.

The example contains a query to the object base. It inquires about women and their sons by Abraham and will return the answer ?X = Sarah, ?Y = Isaac.

F-Logic supports built-ins which define procedural attachments that are seamlessly embedded into F-Logic. Usually a built-in represents an infinite relation. E.g. adding two numbers to a third can be considered as an infinite relation between 3 numbers:

```
      plus(?X,?Y,?Z).
```

So if for the two variables ?X and ?Y values are given the value for ?Z can be computed by the built-in. Built-ins may also occur in the head of the rules. These built-ins access the adapters to the dissemination channels. So a built-in mailto may sends a specified text message to a receiver:

```
   sendMailTo(?R, ?S, ?T) :-
      email:Mail, email[recipient->?R, subject->?S, text->?T, timeToSend->?TS],
      currentTime(?TC), ?TC = ?TS.
```

This rule expresses that an e-mail with recipient, subject and text is sent as soon as the current time equals the send time. The head predicate of the rule sendMailTo accesses the adapter which in turn sends the e-mail via the smtp-sever.

### SCHEMA.ORG

Schema.org is an initiative concerning schemas for annotating data on the Internet, on web pages, in email messages, etc. Schema.org defines vocabularies for different domains. Its vocabularies cover entities, relationships between entities and actions, and can easily be extended through a well-documented extension model [see http://schema.org/]. The vocabulary is used to mark-up website content with metadata about itself. Such mark-up can be recognized by search engine spiders and other parsers, thus gaining access to the meaning of the sites [see https://en.wikipedia.org/wiki/Schema.org]. Schema.org thus provides a semantic annotation of the content.

### REFERENCE SIGNS

101 information dissemination platform 103 distribution channel
105 adapter
107 recipients
109 channel ontology
111 content ontology
113 recipients ontology
201 generating content ontology
203 providing a recipients ontology
205 providing a channel ontology
207 mapping
209 providing multiple adapters
211 disseminating content
213 evaluating rules
215 extracting content
301 computer-based system
303 content ontology generating module
305 mapping module
307 adapter module
309 content provider / extractor

### CITED REFERENCES

Non-patent literature:
- http://schema.org/ (last opened on June 19, 2015)
- https://en.wikipedia.org/wiki/Schema.org (last opened on July 7, 2015)
- Boley, H., Kifer, M., Ptrnjan, P.L., Polleres, A.: Rule interchange on the web. In: Reasoning Web. Volume 4636 of LNCS., Springer (2007) 269-309
- https://en.wikipedia.org/wiki/Production_system_(computer_Science) (last opened on June 19, 2015)
- https://en.wikipedia.org/wiki/Business_rules_engine (last opened on June 19, 2015)
- https://en.wikipedia.org/wiki/Ontology_%28information_science%29 (last opened on July 6, 2015)
- https://en.wikipedia.org/wiki/Ontology_language (last opened on July 6, 2015)
- http://www.w3.org/2005/rules/wg/wiki/Horn_Logic (last opened on July 23, 2015)
- Angele, J., Lausen, G.: "Ontologies in F-Logic" in S. Staab, R. Studer (Eds.): Handbook on Ontologies in Information Systems. International Handbooks on Information Systems, Springer, 2003, page 29).

## Claims

1. Method for disseminating content to recipients using multiple distribution channels (103), comprising the computer-based steps of:
1.1 generating (201) a content ontology (111) comprising said content;
1.2 providing (203) a recipients ontology (113), associated with said recipients;
1.3 providing (205) multiple channel ontologies (109);
1.3.1 wherein each channel ontology (109) is associated with one of said multiple distribution channels (103);
1.4 mapping (207) information from said content ontology (111) and said recipients ontology (113) into said channel ontologies (109) using mapping rules; and,
1.5 providing (209) multiple adapters (105);
1.5.1 wherein each adapter (105) is associated with one channel ontology (109) and arranged for disseminating content over said channel (103);
1.6 disseminating (211) content using said channel ontologies (109) and adapters (105) associated with them.

2. Method according to the preceding claim,
wherein the mapping rules (207) define criteria for selecting recipients and/or channels (103) for the dissemination of at least a part of the content from the content ontology (111).

3. Method according to any of the preceding claims,
wherein the step of mapping (207) information comprises reasoning on said mapping rules, the content ontology (111), the recipient ontology and/or the channel ontologies (109).

4. Method according to the preceding claim,
wherein said recipients ontology (113) comprises attributes or properties of the recipients, the attributes or properties indicating at least one of:
4.1 an age of the recipient;
4.2 a geographical location of the recipient;
4.3 a preferred time period for receiving content;
4.4 a preferred channel for receiving content.

5. Method according to any of the preceding claims,
wherein said content ontology (111) comprises attributes or properties of the content, the attributes or properties indicating at least one of:
5.1 a time period, in which said content is to be distributed to said recipients;
5.2 a geographical area, in which recipients are to be present when said content is distributed;
5.3 a subject of said content.

6. Method according to any of the preceding claims, wherein the method further comprises the step of:
6.1 providing a content extractor (309) capable of extracting content from a content provider; and, preferably,
6.2 placing the extracted content as instance into the content ontology (111).

7. Method according to the preceding claim,
wherein the content provider (215) is the world wide web.

8. Method according to any of the two preceding claims,
wherein the content extractor (309) is configured to read external content
8.1 that is annotated with the help of schema.org and/or
8.2 that is organized in tables and/or
8.3 that is contained in a database.

9. Method according to any of the preceding claims,
wherein at least one channel ontology (109) comprises at least one of:
9.1 access information for the associated distribution channel (103);
9.2 criteria for selecting content suitable for being distributed via the associated channel (103).

10. Method according to any of the preceding claims,
wherein the content ontology (111), the recipients ontology (113) and/or the channel ontology (109) are structured in accordance with the schemas of Schema.org.

11. A computer program, wherein the computer program is adapted to perform the method according to any of the preceding claims while the computer program is being executed on a computer.

12. A computer-readable storage medium storing a set of controller executable code, which, when executed in a mobile device, on a processing system or in a digital signal processor, performs the method steps according to any of the preceding method claims.

13. Computer-based system (101; 301) for disseminating content to recipients using multiple distribution channels (103), comprising:
13.1 a content ontology generating module (303)
13.1.1 arranged for generating a content ontology (111) comprising said content;
13.2 a recipients ontology generating module
13.2.1 arranged for generating a recipients ontology (113) comprising data about said recipients;
13.3 multiple channel ontology generating modules
13.3.1 arranged for generating multiple channel ontologies (109) comprising data about said multiple distribution channels (103);
13.3.2 wherein each channel ontology (109) is associated with one of said multiple distribution channels (103);
13.4 a mapping module (305)
13.4.1 arranged for mapping information from said content ontology (111) and said recipients ontology (113) into said channel ontologies (109) using mapping rules;
13.5 multiple adapter modules (307);
13.5.1 wherein each adapter module (105) is associated with one channel ontology (109) and
13.5.2 arranged for disseminating content over said channel (103).
